# EUROPEAN PATENT SPECIFICATION

(11) **EP 4 071 345 B1**
(45) Date of publication and mention of the grant of the patent: **01.10.2025**
(21) Application number: 21729789.4
(22) Date of filing: 05.02.2021
(51) Int. Cl.: F03B 11/04, F03B 11/02, F03B 3/16, F03B 3/00, F03B 1/00, F03B 3/18

(54) **LOW-COST ANTI-CAVITATION HYDRAULIC TURBINE**
KOSTENGÜNSTIGE ANTIKAVITATIONSHYDRAULIKTURBINE
TURBINE HYDRAULIQUE ANTI-CAVITATION À FAIBLE COÛT

(30) Priority: 06.12.2019 UA 201911717 U
(43) Date of publication of application: 12.10.2022
(73) Proprietor: Koturbach, Ivan Ivanovich, Zakarpatskaya Obl. 89600 (UA)
(72) Inventor: Koturbach, Ivan Ivanovich, Zakarpatskaya Obl. 89600 (UA)
(74) Representative: Górska, Anna
(86) International application number: PCT/UA2021/000012
(87) International publication number: WO 2021/112811

(56) References cited:
- EP-A1- 0 125 496
- WO-A1-2009/151349
- WO-A1-2009/151349
- CN-A- 102 384 005
- GB-A- 986 797
- JP-A- S5 219 832
- JP-A- S59 203 880
- JP-A- S61 279 777
- KR-A- 20020 017 031
- RU-C1- 2 489 597
- SU-A1- 399 618
- UA-U- 88 708

## Description

The invention relates to hydropower, namely, it can be used to convert the kinetic energy of water into mechanical rotational motion, followed by the generation of electrical energy.

International application number WO 2009/151349 A1 discloses a hydraulic turbine with circular flow, consisting of a stator, an access hole for water, the vanes of the turbine, mounted on the rotor, rigidly mounted on the axis of the turbine, the inferior cover of the stator, the ring of the stator, the superior cover of the stator, the deflectors. The turbine is also composed of the evacuation hole, the obstructing sector, having mounted on the inferior cover of the stator the guiding-sealing ring, and on the superior cover of the stator the guiding-sealing ring. The disadvantage of this turbine is that the shape of the vanes is not optimal for energy efficiency.

The famous Francis's radial-axial turbine (Development of thermal power and hydropower. Book 3 "Hydroturbines and Reversible hydraulic machines. Energy 2013 S. Plachkov).

On such hydraulic turbines, the water flow enters the impeller in the radial direction and leaves it in the axial direction.

The disadvantage of this hydroturbine is that the contact of water with the turbine blades for the transfer of potential energy passes for a very short period of time, reduces energy conversion efficiency and significantly increases water consumption.

By changing the direction of the water from radial to axial, the load on the guide vane, the blades of the hydraulic turbine and on the entire unit as a whole increases crucially. This design obliges the entire structure to be made cantilever, which significantly reduces stability, increases vibration and the possibility of destruction of the unit due to high cavitation components and the occurrence of water hammer.

This design is very expensive, material-intensive and high-cost in operation and repair.

The technical result and the task of the proposed technical solution is to simplify the design and manufacture, increase the power and energy conversion efficiency of the hydroturbine, reduce water consumption, which will seriously increase the use of river water resources, reduce the cost of electricity generation and increase the life of the unit as a whole.

The problem is solved by the fact that a hydraulic turbine, which includes a horizontally located rotor with blades that are rigidly attached to the cross of the rotor, while the shape of the blades exactly repeats the configuration of the inner annular chamber of the turbine housing. Two supply pipes opposite the holes are rigidly attached to the side surface of the turbine housing on both sides and the suction pipe is rigidly attached to the outer surface of the hydroturbine housing opposite the hole in the hydroturbine housing. Longitudinal slots with a compressed air supply channel are made in the axial housing of the hydraulic turbine opposite the opening of the suction pipe. The specified device will simplify the design and its further operation, increase the power, reliability and energy conversion efficiency of the hydraulic turbine.

Due to the reduction in water consumption, the efficiency of the use of the hydro-resource of rivers and the durability of the hydro turbine will increase significantly.

The material consumption will notably reduce the cost of manufacturing a hydroturbine, its installation, and as a result, the cost of manufacturing electric energy will significantly decrease.

The essence of the invention is illustrated by drawings, where:

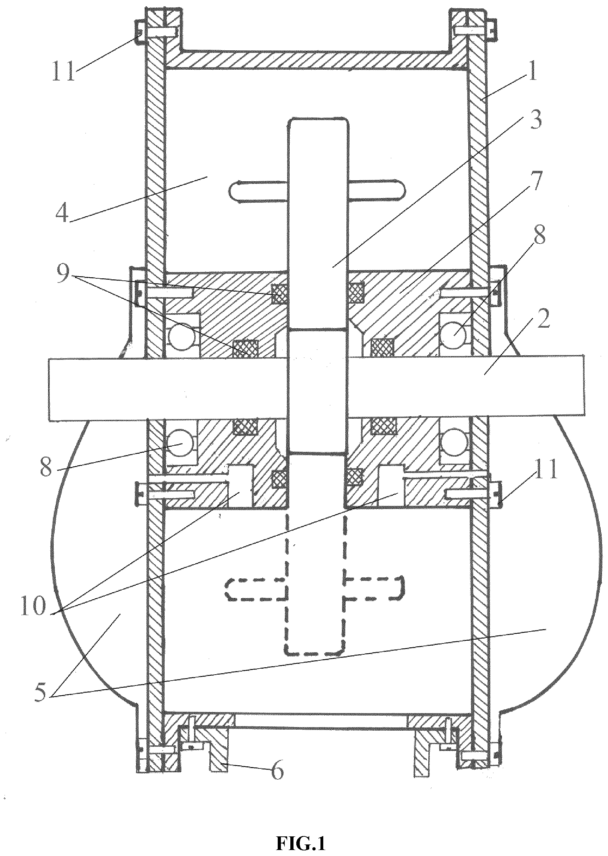

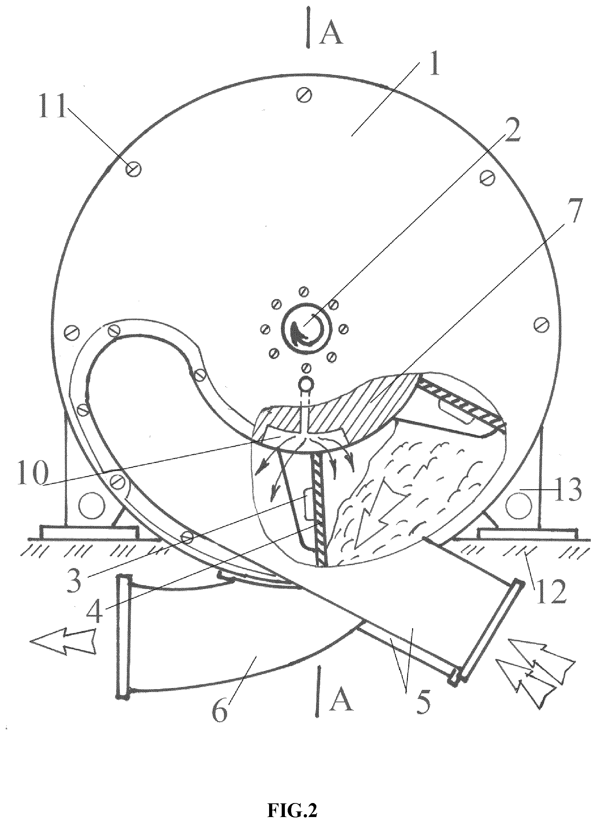

Fig. 1 shows a general view of the hydraulic turbine in section A-A in Fig. 2.
Fig. 2 is a side view with a partial cut to illustrate the process.

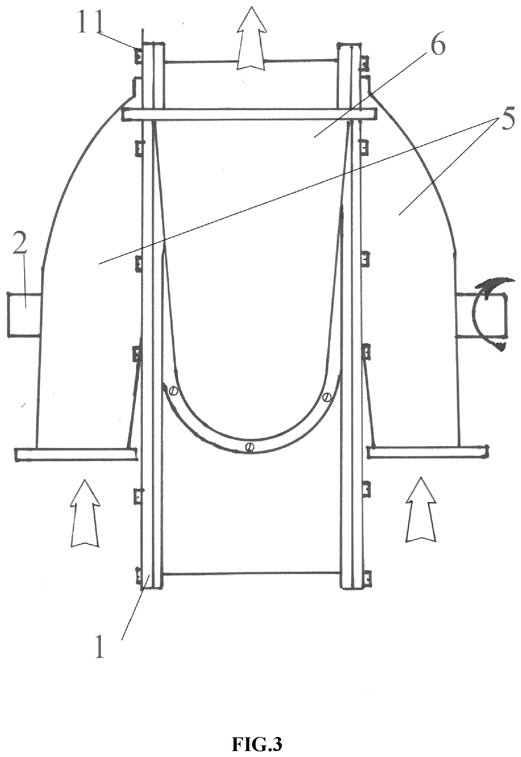

Fig. 3 - bottom view.

The hydraulic turbine consists of a prefabricated housing 1, a rotor 2, with a crosspiece 3, to which the blades 4 are rigidly attached. Two supply pipes 5 are rigidly attached to the side surface of the housing 1 at the corresponding holes on both sides, and in the radial direction, the suction pipe 6 is rigidly attached.

The entire structure is formed on the axial housing of the hydraulic turbine 7 in which bearings 8 and sealing elements 9 are mounted and channels for supplying compressed air 10 are formed. The entire structure is connected by fastening elements (screws) 11. The hydraulic turbine is attached to the concrete foundation 12 through brackets 13.

Hydroturbine works as follows. Pressurized water is supplied to the hydraulic turbines through two side supply pipes 5.

The design with two supply pipes which are rigidly attached on both sides near the corresponding holes on the side surface of the case, was chosen due to the need to compensate for axial forces and faster filling of the turbine. At the same time, the potential energy of water, which is transferred to the blades of the hydroturbine, is made in such a way that it exactly repeats the configuration of the inner annular chamber, which is formed by the hydroturbine body 1.

For more complete sealing, additional seals can be used. In this case, the potential energy of water is converted into rotational movement of the rotor shaft 2. Further, the blades 4 move under the pressure of water along the annular chamber to the hole in the housing at the suction pipe 6.

At the same time, as a result of the ejection of water, with a significant decrease in pressure in the opposite part, a vacuum zone (cavitation) is created, which makes it impossible to completely empty the turbine.

To do this, longitudinal channels 10 are made in the axial zone of the device for supplying compressed air to the rarefaction zone.

After active emptying, the blade passes into the area of the supply pipes 5 and the process is repeated again.

## Claims

1. Low-cost anti-cavitation hydroturbine, consisting of a housing (1), rotor (2), blades (4), supply pipes (5) and a suction pipe (6), **characterized in that** the hydroturbine comprises two supply pipes (5) arranged on a side surface of the housing (1), opposite holes of the housing (1) and the suction pipe (6) is arranged at the bottom in a radial part of the turbine housing (1), and in an axial housing (7) in which bearings (8), a rotor (2) shaft and sealing elements (9) are mounted, longitudinal slots (10) with a compressed air supply channel are provided in front of an opening of the suction pipe (6).

## Patentansprüche

1. Kostengünstige Anti-Kavitations-Hydroturbine, bestehend aus einem Gehäuse (1), einem Rotor (2), Schaufeln (4), Versorgungsrohren (5) und einem Saugrohr (6), **dadurch gekennzeichnet, dass** die Hydroturbine zwei an einer Seitenfläche des Gehäuses (1) angeordnete Versorgungsrohre (5) aufweist, die gegenüberliegenden Löcher des Gehäuses (1) und das Saugrohr (6) sind unten in einem radialen Teil des Turbinengehäuses (1) angeordnet, und in einem axialen Gehäuse (7), in dem Lager (8), eine Welle des Rotors (2) und Dichtungselemente (9) montiert sind, sind Längsschlitze (10) mit einem Druckluftzufuhrkanal vor einer Öffnung des Saugrohrs (6) vorgesehen.

## Revendications

1. Hydroturbine anti-cavitation à faible coût, composée d'un carter (1), d'un rotor (2), de pales (4), de conduites d'alimentation (5) et d'une conduite d'aspiration (6), **caractérisée en ce que** l'hydroturbine comprend deux conduites d'alimentation (5) disposées sur une surface latérale du carter (1), des trous opposés du carter (1) et la conduite d'aspiration (6) est disposée en bas dans une partie radiale du carter de turbine (1), et dans un carter axial (7) dans lequel sont montés des paliers (8), un arbre de rotor (2) et des éléments d'étanchéité (9), des fentes longitudinales (10) avec un canal d'alimentation en air comprimé sont prévues devant une ouverture de la conduite d'aspiration (6).
